# EUROPÄISCHE PATENTSCHRIFT

(11) **EP 1 271 728 B1**
(45) Veröffentlichungstag und Bekanntmachung des Hinweises auf die Patenterteilung: **08.09.2010**
(21) Anmeldenummer: 01440195.4
(22) Anmeldetag: 27.06.2001
(51) Int. Cl.: H02G 1/08, G02B 6/44

(54) **Inliner zur Befestigung von Kabeln in einem Abwasserrohr**
Inliner for fastening cables in a sewage pipe
Revêtement interne pour fixer des câbles dans un tuyau d'égout

(43) Veröffentlichungstag der Anmeldung: 02.01.2003
(73) Patentinhaber: Draka Comteq B.V., 1083 HJ Amsterdam (NL)
(72) Erfinder: Nothofer, Klaus, Dipl.-Ing., 40699 Erkrath (DE); Leppert, Hans-Detlef, Dr.rer.nat., 41189 Mönchengladbach (DE); Teschner, Wolfgang, Ing.(grad), 31515 Wunstorf (DE)
(74) Vertreter: Dohmen, Johannes Maria Gerardus

(56) Entgegenhaltungen:
- WO-A-98/32043
- DE-A- 19 825 325
- DE-U- 29 814 270
- DE-U- 29 815 744
- DE-U- 29 817 126

## Beschreibung

Die Erfindung bezieht sich auf einen Inliner zur Befestigung von Kabeln nach dem Oberbegriff des Anspruches 1 sowie ein Verfahren zur Verlegung eines Inliners nach dem Oberbegriff des Anspruches 5.

Die Nutzung von Abwasser-, Regenwasser-, Mischwasserkanälen oder anderen End- oder Versorgungsleitungen für die Verlegung von Nachrichtenkabel ist eine bereits genutzte Möglichkeit, Tiefbaukosten für den Teilnehmeranschluss (access) zu senken. Es ermöglicht zudem bedarfsorientiert und schnell einen solchen Teilnehmeranschluss auszubauen, was neuerdings durch die Vielzahl von Betreibern zunehmend an Bedeutung bekommt. Im folgenden soll der Begriff Abwasserkanal (Abwasserrohr) auch den Regenwasserkanal, den Mischwasserkanal und End- sowie Versorgungsleitungen umfassen. Während bei begehbaren Kanälen die vorhandene Standardtechnik zur Verlegung von Nachrichtenkabeln eingesetzt werden kann, sind die Probleme bei nichtbegehbaren Kanälen noch weitestgehend ungelöst.

Bei der Verlegung von Kabeln in nicht begehbaren Abwasserkanälen ist zu beachten, dass
- die hydraulisch nutzbare Querschnittfläche nur geringfügig verringert wird,
- möglichst keine Objekte quer zur Fließrichtung verlegt werden müssen,
- keine Angriffspunkte entstehen, die zur Zupfbildung (z.B. Ansammlung von Schwemm-Materialien) und infolge zur Verstopfung führen können, eine Reinigung des Abwasserkanals nicht behindert wird.

Aus der EP 953 162 ist ein Befestigungselement bekannt, mit dem Telekommunikationskabel in Abwasserkanäle gehalten werden können. Dieses bekannte Befestigungselemente besteht aus einem federnd vorgespannten, geschlossenen Edelstahlring, der sich an die Innenwand des Abwasserkanals andrückt. Durch die Verwendung von bereits vorhandenen, nichtbegehbaren Kanal- bzw. Rohrsystemen, wie beispielsweise das Abwassersystem oder Gasrohranlagen, können die Lichtwellenleiterkabel auf einfache Weise bis in die einzelnen Gebäude verlegt werden. Das Verlegen erfolgt mit Hilfe eines fernsteuerbaren Kanalroboters, der die Kabel in die Kanalund Rohrsysteme einbringt und an den Innenwänden befestigt, wobei er die bekannten Befestigungselemente einem mitgeführten Magazin entnimmt. Solche Befestigungselemente, wie in der EP 953 162 beschrieben, können nur mit fernsteuerbaren Kanalrobotern verlegt werden. Somit sind sie nicht anpassbar für Abwasserrohre, die einen so kleinen Durchmesser (kleiner als 20 cm) aufweisen, dass kein Roboter einführbar ist. Doch gerade bei der sogenannten "letzten Meile" d.h. die laterale Strecke, die an dem Gebäude eines Endverbrauchers endet, ist der Bedarf sehr hoch Telekommunikationskabel zu verlegen.

DE 198 25 325 A zeigt einen Inliner zur Befestigung von Kabeln vorzugsweise Telekommunikationskabeln an der Innenwand eines Rohrs, vorzugsweise nicht begehbaren Abwasserrohrs, wobei der Inliner aus mindestens zwei Schichte ausgebildet ist, so dass eine ersten Schicht, die in verlegtem Zustand an der Innenwand des Rohres zu liegen hat, ein Profil zur Aufnahme von Kabeln und Leerräumen aufweist und von einem zweiten hüllartigen Schicht getragen ist. Das Profil zur Aufnahme von Kabeln und Leerräumen ist gebildet durch an der Aussenseite der ersten Schicht befestigten Leerrohre.

DE 198 25 325 A zeigt weiter ein Verfahren zur Verlegung einer Inliner an der Innenwand eines Rohrs, vorzugsweise eines nicht begehbaren Abwasserrohrs, wobei einen Inliner mit einem Profil zur Aufnahme von Kabeln und Leerräumen schlauchartig in die gewünschten Position in das Rohr eingeführt und mit einem Element wie heißem Wasser oder Infrarotstrahlung zum Aufblasen gebracht wird, bis der Inliner an die Innenwand des Rohrs gedrückt wird.

DE 298 15 744 U zeigt ein Reparationsrohr für eine Rohrleitung, die eingesetzt wird um Datenübertragungsleitungen in verzweigte Rohrleitungsnetze bis zu den Endverbraucher zu führen. Das Reparationsrohr ist, mit einer Außenwandung und einer Innenwandung, doppelwandig ausgeführt, mit Stegen die die beiden Wandungen beabstandet halten. Derartige Reparationsrohre sind biegbar um Rohrleitungskrümmungen auf zu nehmen und werden aus Kunststoff, wie aus PVC, gefertigt. Nach Einlegen bzw. Einziehen solche Reparationsrohre, wird der Zwischenraum zwischen den beiden Wandungen ausgegossen.

Die Datenübertragungsleitungen werden im Inneren des Reparationsrohr an einer Wandung fixiert oder in eine Nut in der Wandung eingebettet. Um eine hohe Dichte von Datenübertragungsleitungen aufzunehmen, werden Datenübertragungsleitungen verlegt im Zwischenraum zwischen beiden Wandungen des Reparationsrohrs und schließlich mit dem Hohlraum vergossen oder werden eingebettet in eine Nut an der Außenseite der Außenwandung des Reparationsrohrs.

Der Erfindung liegt die Aufgabe zugrunde, Inliner zu entwickeln, die eine Befestigung von Kabeln an der Innenwand eines Rohres sowie eine zufriedenstellende Sanierung letzteres ermöglicht, ohne dabei den Freiraum des Abwasserrohres zu sehr zu beeinträchtigen.

Die Aufgabe wird erfindungsgemäß durch einen Inliner zur Befestigung von Kabeln nach der Lehre des Anspruches 1, sowie durch ein Verfahren zur Verlegung eines Inliners nach der Lehre des Anspruches 5 gelöst.

Die Ausbildung von Inliner aus zwei Schichten, wobei eine erste Schicht mit einem Profil zur Verlegung von Kabeln, vorzugsweise Telekommunikationskabeln, versehen ist und eine zweite hüllartige Schicht ermöglicht gleichzeitig die Sanierung von lateralen Abwasserrohren mit einem typischen kleinen Querschnitt als auch die Verlegung von Kabeln, vorzugsweise Telekommunikationskabeln an der Innenwand solcher Rohre. Die Bildung von Profilen zur Haltung von Telekommunikationskabeln innerhalb dieser ersten Schicht verhindert Störstellen an der sanierten Innenwand zu bilden, indem der innere Umfang des Inliners gleichmäßig bleibt.

Vorteilhafte Ausgestaltungen der Erfindung ergeben sich aus den abhängigen Ansprüchen, der nachfolgenden Beschreibung und den Zeichnungen.

Ein Ausführungsbeispiel der Erfindung wird nun unter Zuhilfenahme der Fig. 1 bis 6 erläutert.

### Es zeigen:

- Fig. 1: ein Kabel nach dem Stand der Technik in einem Rohr verlegt,
- Fig. 2: ein Querschnitt eines Rohres mit einem Inliner nach dem Stand der Technik,
- Fig. 3: ein Querschnitt eines Rohres mit einem Inliner nach dem Stand der Technik,
- Fig. 4a, 4b: eine Sicht des Inliners nach dem Stand der Technik (4a) und des erfindungsgemässen Inliners (4b) mit zwei unterschiedlichen Ausgestaltungen des Profils,
- Fig. 5: ein Querschnitt des Inliners nach Figuren 4a und 4b,
- Fig. 6: ein Querschnitt des Inliners mit einer alternativen Ausgestaltung des Profils.

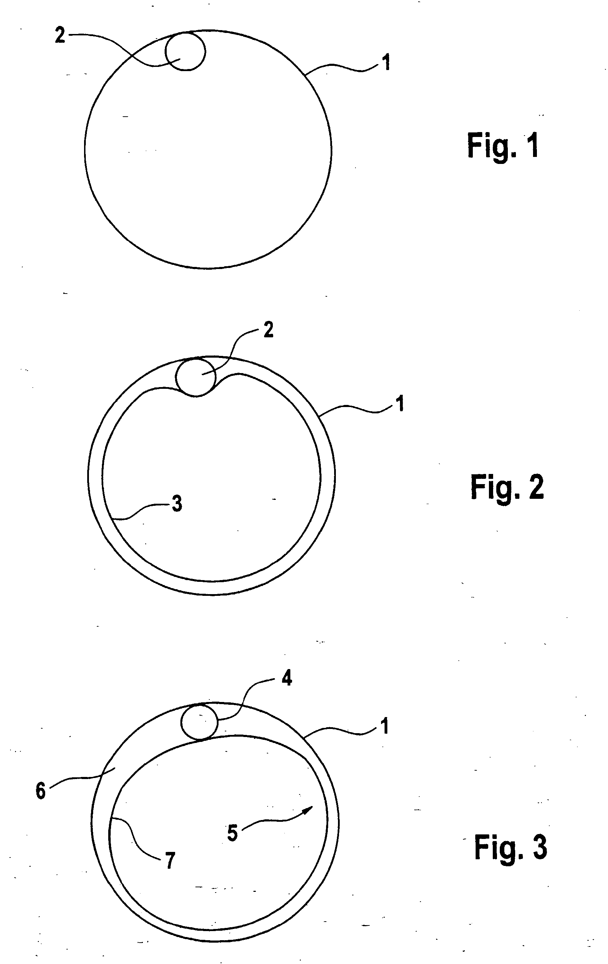

In Fig. 1 ist ein Querschnitt eines Rohres 1 z.B. Abwasserrohres mit einem Kabel, das an der Innenwand des Rohres 1 mit Hilfe von Bohr- und Dübelverfahren verlegt ist. Ein solches Verfahren ist natürlich nur in begehbaren Abwasserkanälen oder Abwasserkanälen mit einem Durchmesser hinreichend groß, um die Einführung eines Roboters zuzulassen.

In Fig. 2 ist ein Querschnitt eines Rohres 1 zusammen mit einem eingesetzten Inliner 3, wie aus dem Stand der Technik bekannt, gezeichnet. Ein solcher Inliner 3 wäre auch ohne Roboter einsetzbar, indem es schlauchartig gebildet ist, und im Rohr 1 eingeblasen wird. Dabei wird der Inliner 3 das Kabel 2 an der Innenwand des Rohres 1 halten. Doch ist deutlich zu erkennen, dass der Inliner 3 das Kabel teilweise umgibt und somit eine gewisse Irregularität im Umfang des sanierten Rohres 1 sich ergibt. Dies kann zu erheblichen Problemen im Laufe der Benutzung des sanierten Rohres 1 führen, wie z.B. eine Zupfbildung.

In Fig. 3 ist ein Rohr 1 vorzugsweise Abwasserrohr im Querschnitt mit einem Inliner 5 nach dem Stand der Technik, im Querschnitt gezeichnet.

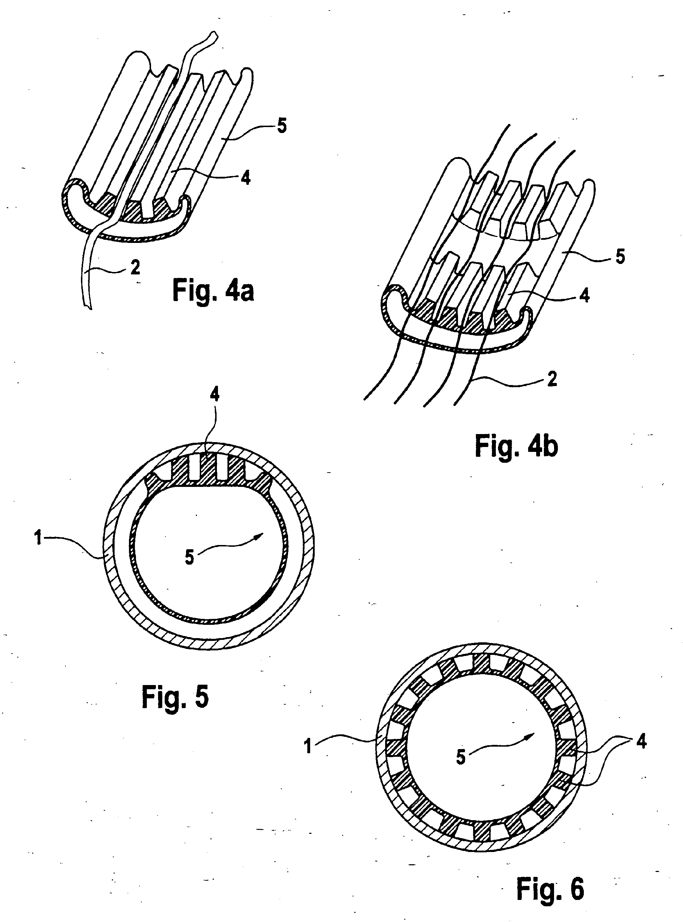

Fig. 4 a zeigt eine ersten Ausgestaltung des Inliner 5, wobei das Profil 4 zur Aufnahme von Kabeln oder Leerräumen an der Außenseite der Inliner 5 herausragenden longitudinalen Riffeln aufweist.

Fig. 4 b zeigt eine zweiten Ausgestaltung des erfindungsgemäßen Inliner, wobei das Profil 4 zur Aufnahme von Kabeln oder Leerräumen an der Außenseite der Inliner 5 herausragenden longitudinalen Riffeln aufweist, und die longitudinalen Riffeln in Längsrichtung in Abstände nach Sektoren unterbrochen sind.

Der Inliner 5 besteht aus zwei Schichten, eine erste Schicht, die ein Profil 4 zur Aufnahme von Kabeln oder Leerräume aufweist und von einer zweiten hüllartigen Schicht getragen ist. Das Profil 4 kann gegebenenfalls über den ganzen Umfang des Inliners 5 verteilt sein (siehe Fig. 6). Die erste Schicht besteht aus einer tragenden Gewebeschicht, z.B. getränkt mit aushärtbarem Harz, in dem das Profil 4 aufgetragen wird. Dabei kann dieses Profil 4 entweder werksseitig oder auch auf der Baustelle vor das Verlegen dieses Inliners 5 aufgetragen. Die eine Schicht weist eine ähnliche Elastizität wie die zweite hüllartige Schicht auf, wobei die eine Schicht eine nachträgliche Ausbeulung des Inliners 5 im verlegten Zustand zu verhindern hat. Hierbei kann das Profil 4 auch so ausgeformt sein, dass auch nachträglich Kabel in den Leerräumen eingeführt werden können. Ferner kann das Profil punktuell oder auch über den ganzen Umfang verteilt sein. Das Profil 4 ist so ausgelegt, dass in Längsrichtung, in Abständen die Möglichkeit besteht, mittels Unterbrechungen (Sektorweise, siehe Fig. 4b), eine Richtungsänderung (Positionsänderung) der Kabel oder Leerräume vornehmen zu können. Dies ist von Bedeutung, wenn seitlich (laterale) Zuläufe sich im Kanal befinden.

Zur Verlegung eines erfindungsgemäßen Inliners 5 an der Innenwand eines Rohres 1 wird er gegebenenfalls gemeinsam mit den Kabeln (siehe Fig. 4a), die an der gewünschten Position in das Profil gelegt werden, in das Rohr 1 eingeführt. Dieser Inliner 5 lässt sich aufblasen, da die zweite hüllartige Schicht 7 einseitig geschlossen ist. Letztere kann mit aushärtbarem Kunststoffmaterial wie z.B. Epoxyd oder Harz getränkt werden. In der gewünschten Position im Rohr 1 wird dann die zweite hüllartige Schicht 7 unter heißem Wasser oder Dampf gegebenenfalls auch unter Infrarotbestrahlung ausgesetzt und dadurch aufgeblasen. Somit legt sich Inliner 5 an die Innenwand des Kanals. Dabei wird das Profil 4 an die Innenwand des Kanals gedrückt. Falls beim Einsetzen des Inliners 5 in dem Rohr 1 nicht gleichzeitig Kabel eingeführt wurden, können diese Kabel wie Telekommunikationskabel zum Beispiel Lichtwellenleiter nach Aushärtung in die Leerräume eingeführt werden. Hierfür können gegebenenfalls in den Leerräumen Ziehhilfen z.B. Hilfsseile vorinstalliert werden (siehe Fig. 4b).

Solche erfindungsgemäßen Inliner 5 können zur Sanierung von Rohren vorzugsweise nichtbegehbare Abwasserrohre verwendet werden. Zu dem dienen solche erfindungsgemäße Inliner als Befestigung für in solchen Rohren zu verlegenden Kabeln. Dabei kann sich die Befestigung auf die gesamte Länge des Rohres verteilen oder auch nur Punktweise in kürzeren Abständen gebildet werden. Falls Leerräume in die eine Schicht des erfindungsgemäßen Inliners 5 miteingeplant ist, können auch in einem späteren Verfahren zusätzliche Kabel in das Rohr 1 eingeführt werden. Wichtig ist dabei, dass der Inliner 5über seinen ganzen Umfang schön regelmäßig bleibt, wie es im Querschnitt in Fig. 5 gezeigt ist. Dies verhindert die nachträgliche Bildung von Verstopfungen.

## Patentansprüche

1. Inliner (5) zur Befestigung von Kabeln (2) vorzugsweise Telekommunikationskabeln an der Innenwand eines Rohrs (1) vorzugsweise nicht begehbaren Abwasserrohrs, wobei der Inliner (5) aus mindestens zwei Schichten (6, 7) ausgebildet ist, und eine ersten Schicht (6), die im verlegten Zustand an der Innenwand des Rohrs (1) zu liegen hat, ein Profil (4) zur Aufnahme von Kabeln oder Leerräumen aufweist und von einer zweiten hüllartigen Schicht (7) getragen ist, **dadurch gekennzeichnet, dass** das Profil (4) zur Aufnahme von Kabeln oder Leerräumen an der Außenseite der Inliner (5) herausragende longitudinale Riffeln aufweist, und die Riffeln im verlegten Zustand an der Innenwand des Rohrs (1) sich in axialen Richtung erstreckenden Kanäle zur Aufnahme von Kabeln oder Leerräume begrenzen,
wobei die longitudinalen Riffeln des Profils (4) in Längsrichtung in Abstände nach Sektoren unterbrochen sind.

2. Inliner (5) nach Anspruch 1, wobei das Profil (4) über den ganzen Umfang des Inliners (5) verteilt ist.

3. Inliner (5) nach einem der Ansprüche 1 bis 2, wobei die erste Schicht (6) eine ähnlich Elastizität wie die zweite hüllartige Schicht (7) aufweist, und eine nachträgliche Ausbeulung des Inliners (5) im verlegten Zustand zu verhindern hat.

4. Inliner (5) nach einem der Ansprüche 1 bis 3, wobei die zweite hüllartige Schicht (7) schlauchartig gebildet ist, vorzugsweise mit getränktem aushärtbarem Harz.

5. Verfahren zur Verlegung eines Inliners (5) an der Innenwand eines Rohrs (1), vorzugsweise nicht begehbaren Abwasserrohrs, wobei ein aus mindestens zwei Schichten (6, 7) ausgebildete Inliner (5) mit eine ersten Schicht (6), die im verlegten Zustand an der Innenwand des Rohres (1) zu liegen hat, ein Profil (4) zur Aufnahme von Kabeln oder Leerräumen aufweist und von einer zweiten hüllartige Schicht (7) getragen ist, schlauchartig einseitig geschlossen in die gewünschte Position in das Rohr (1) eingeführt, und mit einem Element wie heißem Wasser, Dampf oder Infrarotbestrahlung zum Aufblasen gebracht wird, bis der Inliner (5) an die Innenwand des Rohrs (1) gedrückt wird, **dadurch gekennzeichnet, dass** das Profil (4) zur Aufnahme von Kabeln oder Leerräume an der Außenseite der Inliner (5) herausragende longitudinale Riffeln aufweist, und die Riffeln Im verlegten Zustand an der Innenwand des Rohrs (1) sich in axialer Richtung erstreckende Kanäle zur Aufnahme von Kabeln oder Leerräume begrenzen,
wobei die longitudinalen Riffeln des Profils (4) in Längsrichtung in Abstände nach Sektoren unter brochen sind.

## Claims

1. Internal liner (5) for attaching cables (2), preferably telecommunications cables, to the inner wall of a pipe (1), preferably a non-accessible wastewater pipe, wherein the internal liner (5) is made from at least two layers (6, 7), and a first layer (6), which in the laid state is to lie against the inner wall of the pipe (1), has a profile (4) for accommodating cables or empty spaces and is supported by a second sheath-like layer (7), **characterized in that** the profile (4) for accommodating cables or empty spaces has protruding longitudinal ribs on the outer side of the internal liner (5), and in the laid state the ribs define channels for accommodating cables or empty spaces, which channels extend in the axial direction on the inner wall of the pipe (1), the longitudinal ribs of the profile (4) being interrupted sector-wise at intervals in the longitudinal direction.

2. Internal liner (5) according to claim 1, wherein the profile (4) is distributed over the entire circumference of the internal liner (5).

3. Internal liner (5) according to either one of claims 1 and 2, wherein the first layer (6) has similar elasticity to the second sheath-like layer (7), and is to prevent subsequent bulging of the internal liner (5) in the laid state.

4. Internal liner (5) according to any one of claims 1 to 3, wherein the second sheath-like layer (7) is of hose-like form, preferably having impregnated curable resin.

5. Method of laying an internal liner (5) against the inner wall of a pipe (1), preferably a non-accessible wastewater pipe, wherein an internal liner (5) made from at least two layers (6, 7), having a first layer (6), which in the laid state is to lie against the inner wall of the pipe (1), has a profile (4) for accommodating cables or empty spaces and is supported by a second sheath-like layer (7), is inserted hose-like, closed at one end, into the desired position in the pipe (1), and using an element, such as hot water, steam or infrared irradiation, is caused to inflate until the internal liner (5) is pressed against the inner wall of the pipe (1), **characterized in that** the profile (4) for accommodating cables or empty spaces has protruding longitudinal ribs on the outer side of the internal liner (5), and in the laid state the ribs define channels for accommodating cables or empty spaces, which channels extend in the axial direction on the inner wall of the pipe (1), the longitudinal ribs of the profile (4) being interrupted sector-wise at intervals in the longitudinal direction.

## Revendications

1. Inliner (5) pour la fixation de câbles (2), de préférence de câbles de télécommunication sur la paroi interne d'un tuyau (1), de préférence d'un tuyau d'eaux usées praticable, l'inliner (5) étant constitué d'au moins deux couches (6, 7), et une première couche (6), qui doit être disposée dans l'état posé sur la paroi intérieure du tuyau (1), présente un profil (4) pour le logement de câbles ou d'espaces vides et est porté par une seconde couche (7) de type enveloppe, **caractérisé en ce que** le profil (4) présente des cannelures longitudinales saillantes sur le côté extérieur de l'inliner (5) pour le logement de câbles ou d'espaces vides, et les cannelures délimitent, dans l'état posé sur la paroi intérieure du tuyau (1), des canaux s'étendant dans la direction longitudinale pour le logement de câbles ou d'espaces vides, les cannelures longitudinales du profil (4) étant interrompues dans la direction longitudinale à des intervalles par secteur.

2. Inliner (5) selon la revendication 1, le profil (4) étant réparti sur l'ensemble du pourtour de l'inliner (5).

3. Inliner (5) selon l'une quelconque des revendications 1 à 2, la première couche (6) présentant une élasticité similaire à la seconde couche (7) en forme d'enveloppe, et devant empêcher un débosselage ultérieur de l'inliner (5) dans l'état posé.

4. Inliner (5) selon l'une quelconque des revendications 1 à 3, la seconde couche (7) en forme d'enveloppe étant formée à la façon d'un flexible, de préférence avec une résine durcissable imbibée.

5. Procédé pour poser un inliner (5) sur la paroi intérieure d'un tuyau (1), de préférence un tuyau d'eaux usées non praticable, un inliner (5) conçu à base d'au moins deux couches (6, 7) avec une première couche (6), qui doit être disposée dans l'état posé sur la paroi intérieure du tuyau (1), présentant un profil (4) pour le logement de câbles ou d'espaces vides et étant porté par une seconde couche (7) en forme d'enveloppe, étant fermé d'un côté à la façon d'un flexible et introduit dans la position souhaitée dans le tuyau (1), et étant gonflé avec un élément tel que de l'eau chaude, de la vapeur ou du rayonnement infrarouge jusqu'à ce que l'inliner (5) soit appuyé sur la paroi intérieure du tuyau (1), **caractérisé en ce que** le profil (4) présente des cannelures longitudinales dépassant sur le côté extérieur de l'inliner (5) pour le logement de câbles ou d'espaces vides et les cannelures délimitent, dans l'état posé sur la paroi interne du tuyau (1), des canaux s'étendant dans la direction axiale pour le logement de câbles ou d'espaces vides,
les cannelures longitudinales du profil (4) étant interrompues dans le sens longitudinal à des intervalles par secteurs.
